# EUROPEAN PATENT SPECIFICATION

(11) **EP 1 645 080 B1**
(45) Date of publication and mention of the grant of the patent: **13.02.2008**
(21) Application number: 03734590.7
(22) Date of filing: 03.04.2003
(51) Int. Cl.: H04L 12/407

(54) **COMMUNICATION SYSTEM AND METHOD FOR SEQUENTIAL DATA TRANSMISSIONS IN A FIRE DETECTION NETWORK**
KOMMUNIKATIONSSYSTEM UND VERFAHREN ZUR SEQUENZIELLEN DATENÜBERTRAGUNG IN EINEM FEUERERKENNUNGSNETZWERK
SYSTEME DE COMMUNICATION ET PROCEDE POUR LA TRANSMISSION DE DONNEES SEQUENTIELLES DANS UN RESEAU DE DETECTION DU FEU

(30) Priority: 03.04.2002 ZA 200202584
(43) Date of publication of application: 12.04.2006
(73) Proprietor: GSBS DEVELOPMENT CORPORATION, Charlotte, NC 28277 (US)
(72) Inventor: ATTWELL, Colin William Peter, Bellville 7530 (ZA)
(74) Representative: Tomerius, Isabel
(86) International application number: PCT/ZA2003/000044
(87) International publication number: WO 2003/084151

(56) References cited:
- EP-B- 0 643 503
- WO-A-02/28020
- A. SCHIFFERMÜLLER: "Entwicklung und Leistungsanalyse von Zugriffsprotokollen für getaktete WDM Metro-Ringe mit direkter Unterstützung von IP-Paketen über der optischen Schicht" DIPLOMARBEIT, INSTITUT FÜR KOMMUNIKATIONSNETZE, TU WIEN, [Online] September 2001 (2001-09), pages 1-54, XP002252443 Retrieved from the Internet: <URL:http://www.ikn.tuwien.ac.at/?lang=en& user=stud&section=dipl&detail=end> [retrieved on 2003-08-26]
- TOBAGI F A ET AL: "Expressnet: a high-performance integrated-services local area network" IEEE JOURNAL ON SELECTED AREAS IN COMMUNICATIONS, NOV. 1983, USA, vol. SAC-1, no. 5, pages 898-913, XP002252444 ISSN: 0733-8716
- CHLAMTAC I ET AL: "A MULTIBUS TRAIN COMMUNICATION (AMTRAC) ARCHITECTURE FOR HIGH-SPEED FIBER OPTIC NETWORKS" IEEE JOURNAL ON SELECTED AREAS IN COMMUNICATIONS, IEEE INC. NEW YORK, US, vol. 6, no. 6, 1 July 1988 (1988-07-01), pages 903-912, XP000006887 ISSN: 0733-8716
- CHLAMTAC I ET AL: "BRAM: THE BROADCAST RECOGNIZING ACCESS METHOD" IEEE TRANSACTIONS ON COMMUNICATIONS, IEEE INC. NEW YORK, US, vol. COM-27, no. 8, August 1979 (1979-08), pages 1183-1190, XP000809380 ISSN: 0090-6778

## Description

### FIELD OF THE INVENTION

THIS INVENTION relates to communications systems and a method of communication according to the preambles of the claims 1 and 7.

### BACKGROUND TO THE INVENTION

One requirement in a node-to-node communications system is that large amounts of information must be transmitted rapidly and without one burst of Information being transmitted colliding with another burst of information being transmitted.

In a simple system, one node can be designated as the hub and all the other nodes as slaves which transmit information to, and receive information from, the hub but do not "speak" to or "hear" one another. The transmission of data can thus be considered as constituting "private" conversations between the hub and a specific slave. The transmission is not heard by the other nodes.

In other systems the data Is broadcast and is received by all nodes in the system. The software of each receiving node discriminates between data intended for it and data not intended for it.

As soon as the system involves a larger number of nodes, the hub system becomes impractical as the time delays inherent in such a system are not acceptable. This is manifested as slow response times and in some systems is only an irritation. In systems such as fire detection systems it becomes a hazard as it unacceptably delays the reporting of a fire or other event.

The system known as the multi-drop R5485 has been developed to reduce time delays and is a definite improvement over a hub system. All the nodes are in parallel on one pair of wires and the use of time differentials inhibits collisions between data bursts being transmitted. One node is designated as the master node and the others are all slave nodes. All the nodes can hear one another and speak to one another. However, there is still a problem in that the master node polls each slave node in turn and then receives a confirmation signal and the transmission of data. Only when this transmission is complete does the master node poll the next slave node and then await a response and the data. Much time is spent transmitting what are referred as "housekeeping" signals which control the system but do not carry data.

A third system is known as the token ring system. In this the nodes all become peers and the peer with the token is the one that can transmit. By the use of "housekeeping" signals, the token is passed from one node to another whereby each node has a turn at transmitting.

Applicant's experimental work has shown that when the number of nodes reach thirty, forty and upwards, the time delays inherent in these systems are unacceptable, particularly in a fire detection environment.

The diploma thesis "Entwicklung und Leistungsanalyse von Zugriffsprotokollen für getaktete WDM Metro-Ringe mit direkter Unterstützung von IP-Paketen über der optischen Schicht" by A. Schiffmüller, September 2001 (2001-09), XP002252443 discloses a communication system comprising a plurality of nodes, the nodes being sequentially numbered and transmission of signals by the nodes being sequential and in accordance with the numbering of the nodes, each node including means for generating a signal for transmission which signal includes information on the signal length, detecting the signal length received and means for initiating, at its turn in the predetermined sequence, its transmission upon detecting that signal of the length indicated by said information has been received from the preceding node in the sequence.

The objective problem of the present invention to be solved is to provide a schedule-based medium access control protocol operating in a distributed manner, i. e., without incorporating a centralized station arbitrating transmission, relying on a linear topology such as a bus or ring network.

This object is solved by a system as claimed in claim 1 and the method as claimed in claim 7.

### BRIEF DESCRIPTION OF THE INVENTION

According to one aspect of the present invention there is provided a peer-to-peer communications system comprising a plurality of peers In a multi-drop arrangement on a single pair of wires so that each peer can hear each other peer and speak to each other peer, said peers being numbered sequentially and transmission of data by the next peer in the sequence being initiated upon termination of the transmission by the previous peer in the sequence without said next peer being polled to cause it to commence transmission.

According to a further aspect of the present invention there is provided a peer-to-peer communications system comprising a plurality of peers connected in a multi-drop arrangement on a single pair of wires so that each peer can hear each other peer and speak to each other peer, the peers being numbered and transmission of signals by the peers being sequential and in accordance with the numbering of the peers, each peer including means for generating a signal for transmission which signal includes information on the length of the signal, each peer further including means for detecting the length of the signal received and, in its turn in the predetermined sequence, initiating its transmission upon detecting that a signal of the length indicated by said information has been received from the preceding peer in the sequence.

To enable a peer which has a priority message to transmit to interrupt the normal sequence of transmissions which is in accordance with the numbering of the peers, each peer includes means for detecting the end of a transmission and means for transmitting a break message into the gap between the previous transmission and the start of the transmission by the next peer in the normal sequence.

Each peer can include means for detecting the rate at which data is being transmitted on the network, and means for reducing the length of its transmission, or eliminating data transmission by it, in the event that the transmission rate exceeds a predetermined threshold.

Each peer can further include means for logging data transmissions received by it and, in its turn in the transmission sequence, transmitting acknowledgements to the peers from which the data transmissions were received.

Each peer can further include means for creating and transmitting address information whereby each peer determines the peer or peers to which a transmission is directed.

The system of the present invention can further include means for detecting a data collision upon simultaneous transmission by two or more peers, and means for recommencing the data transmission sequence at a predetermined peer.

The system can include means for determining the integrity of a data transmission and also the beginning and end of the data transmission by way of a cyclic redundancy check.

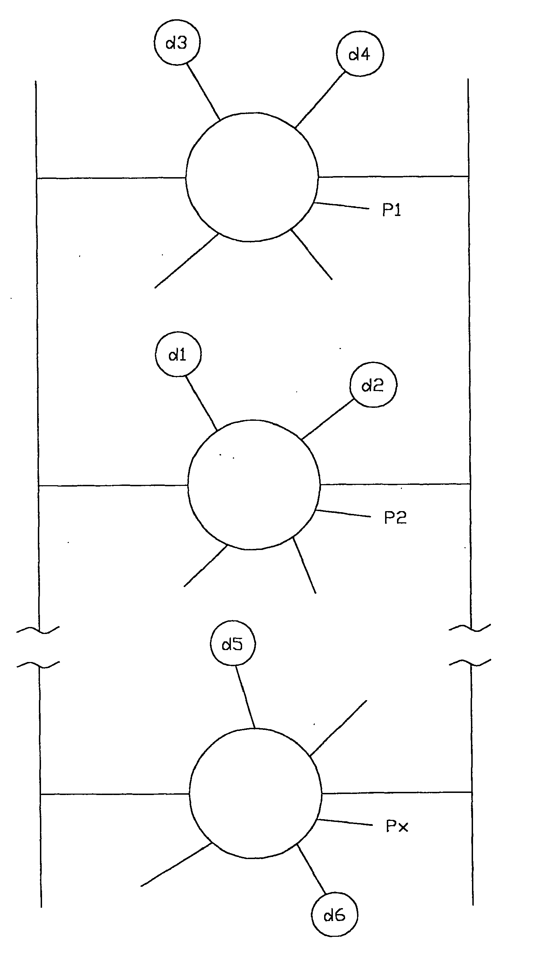

### BRIEF DESCRIPTION OF THE DRAWING

For a better understanding of the present invention, and to show how the same may be carried into effect, reference will now be made, by way of example, to the accompanying drawing in which the single Figure diagrammatically illustrates a system in accordance with the present invention.

### DETAILED DESCRIPTION OF THE DRAWING

In a communications system bandwidth is always the factor which limits the amount of useful data which can be transmitted in a given time period. The amount of data which can be transmitted is reduced by the control messages which are essential to running the system, but contain no useful data, and by characters additional to the data characters and which demarcate data fields and validate the data. Quiet periods between transmission of data and any repeated data messages all reduce the bandwidth available for transmission of useful data.

In the single Figure of the drawings P1 to Px are all peers. In the specific embodiment being described each peer is a fire panel which receives data from detectors d1, d2. Because there is a physical link between peers, such as a multi-drop, half duplex RS-485 over a twisted pair copper cable or other communication link, all peers can hear one another and talk to one another.

At start up the sequence followed establishes the quantity and numbering of peers in the system, each peer being configured with its identifying number and having stored therein the numbers of all peers on the network.

The lowest numbered peer initiates the start up sequence in the system based on a finite delay, which is a multiple of the peer number. Initially each peer transmits only a header block message (as described below) until the entire network has been traversed one or more times. This is to enable all peers to determine whether the expected peers are present or absent.

Each peer, starting with the lowest numbered one, then transmits to all other peers. A message which is devoid of data can, for example, comprise six bytes as follows:

| | | | | | |
|---|---|---|---|---|---|
| 1 | 2 | 3 | 4 | 5 | 6 |

| | | | | | |
|---|---|---|---|---|---|
| Byte 1 - Peer Number Byte 2 - Peer Anti number Bytes 3/4 - Information on signal length Bytes 5/6 - CCITT polynomial CRC (cyclic redundancy check) | | | | | |

These six bytes constitute a header and, if there is no data to transmit or acknowledgement to be sent, the length of the signal as transmitted in bytes 3 and 4 is the length of the header.

Acknowledgements of data previously received by the peer and data are transmitted immediately after bytes 5 and 6, preferably in the order of acknowledgements and then data. At the end of the data transmission another CCITT polynomial CRC check is made to verify the integrity of the data and acknowledgements transmitted.

The data transmitted by each peer includes the address of the sending peer and the address(es) of the peer or peers which are to receive the data and react to it. This can be contrasted to a simple broadcast system in which the data transmitted is received by all peers, and the software of the receiving peers discriminates between data intended for them and data not intended for them. In accordance with the present invention it is the sending peer which determines which receiving peers must receive and react to the data. Peers do not react to transmissions not addressed to them.

It is an essential requirement of a fire detection system that reception of data sent by one peer to one or more other peers be acknowledged. If it is not acknowledged then, for fail safe purposes, it has to be transmitted again. This can waste bandwidth.

Each peer can receive one or more data transmissions from another peer, or can receive one or more data transmissions from each of two or more other peers. In accordance with the present invention each peer includes means for logging data transmissions received by it and, in its turn in the transmission sequence, transmitting acknowledgements to the peers from which the data transmissions were received.

This can be contrasted to the prior systems known to applicant in which nodes immediately acknowledge data transmissions received by them or only acknowledge when polled by the node which sent the information.

To further enhance the ability of the system to transmit data which is designated high priority data in preference to data which is of low priority, the present invention provides means for load shedding.

The peers in the network are all of equal status and no peer is ever assigned network master status and no peer ever controls the whole network. Each peer is programmed to control its own use of the network in an orderly fashion. As part of this self control a load shedding algorithm is employed. During normal communication each peer transmits data up to the maximum number of characters allowed. In the event that the peer detects that the system is handling transmissions at above a predetermined threshold rate, the load shedding facility reduces, or even terminates, the transmission of low priority data until the transmissions the system is handling drop to below the threshold rate.

In the event that data to be transmitted by a peer is designated high priority, but exceeds the permitted message length, the data transmission can in accordance with the present invention include information to the effect that there is more high priority information to be transmitted. Receipt by other peers to this transmission causes the other peers to withhold transmission of data of lower priority but to transmit acknowledgements and data of the same or higher priority.

This situation will prevail until the peer with high priority data to transmit has cleared its message storage buffer.

The communications system also includes the facility for a peer to interrupt the normal data transmission sequence by inserting a break signal into the network.

At the end of the transmission by any peer, whether the transmission be a header or a header plus acknowledgements or a header plus acknowledgements plus data, there is a period of silence to permit the RS-485 line to settle to a floating state. This period can be, for example, 20 milliseconds.

At the end of this period the next peer would normally commence transmitting. However, the insertion of a break signal into this quiet time by any peer causes all other peers to enter a "back-off" mode during which their ability to transmit is blocked. Once the high priority message has been transmitted the normal sequence recommences, starting with the next peer in the sequence from the one which transmitted the break signal.

It will be understood that except in the circumstances just discussed no peer should start transmitting until the end of the quiet period, and then only in its sequence, and no peer should transmit whilst it is detecting a transmission emanating from another peer.

However, the system must be able to deal with a situation where two transmissions do occur simultaneously, this resulting in corrupted data being received by the peers. As no peer receives an intelligible transmission, there is a failure in the sequence and no peer is switched to its transmission mode. This has the effect of "re-setting" the system so that the first peer in the sequence commences to transmit following a detected data collision.

Enabling a peer to log received transmissions and then send, in its turn in the sequence, all necessary acknowledgements to the peers from which transmissions were received, reduces the number of transmissions that are necessary. However, it will be understood that each peer acts on a received transmission immediately even though its acknowledgement may be delayed due to its position in the sequence vis-a-vis the sending peer.

## Claims

1. A peer-to-peer communications system comprising a plurality of peers (P1-Px) connected in series so that each peer can hear each other peer and speak to each other peer,
**characterized in that**
the peers each have an identifying number and means for transmitting signals in sequence in accordance with the identifying number, each peer including means for generating a signal for transmission which signal includes information on the length of the signal and each peer further including means for detecting the length of the signal received and, in its turn in the predetermined sequence, initiating its transmission upon
detecting that a signal of the length indicated by said information has been received from the preceding peer in the sequence,
wherein each peer includes means for detecting the ends of a transmission and means for transmitting a break message into the gap between the previous transmission and the start of the transmission by the next peer in the sequence.

2. A system as claimed in claim 1,
**characterized in that**
each peer (P1-Px) includes means for detecting the rate at which data is being transmitted on the network, and means for reducing the length of its transmission, or eliminating data transmission by it, in the event that the transmission rate exceeds a predetermined threshold.

3. A system as claimed in any one of claims 1 or 2,
**characterized in that**
each peer (P1-Px) further includes means for logging data transmissions received by it and, in its turn in the transmission sequence, transmitting acknowledgments to the peers from which the data transmissions were received.

4. A system as claimed in any preceding claim,
**characterized in that**
each peer (P1-Px) includes means for creating and transmitting address information whereby each peer determines the peer or peers to which a transmission is directed.

5. A system as claimed in any preceding claim,
**characterized in that**
including means for detecting a data collision upon simultaneous transmission by two or more peers (P1-Px), and means for recommencing the data transmission sequence at a predetermined peer.

6. A system as claimed in any preceding claim,
**characterized in that**
including means for determining the integrity of a data transmission and also the beginning and end of the data transmission by way of a cyclic redundancy check.

7. A method of peer-to-peer communication among a plurality of peers (P1-Px) connected in series so that each peer can hear each other peer and speak to each other peer, comprising:
numbering each peer with an identifying number;
transmitting signals by the peers in sequence in accordance with the identifying numbers; and
generating a signal for transmission by each peer that includes information on the length of the signal;
wherein each peer detects the length of the signal received and, in its turn in the predetermined sequence, initiates its transmission upon detecting that a signal of the length indicated by said information has been received from the preceding peer in the sequence, and
wherein each peer detects the ends of a transmission and transmits a break message into the gap between the previous transmission and the start of the transmission by the next peer in the sequence.

8. The method of claim 7,
**characterized in that**
each peer (P1-Px) detects the rate at which data is being transmitted on the network, and reduces the length of its transmission, or eliminates data transmission in the event that the transmission rate exceeds a predetermined threshold.

9. The method of any one of claims 7 or 8,
**characterized in that**
each peer (P1-Px) logs data transmissions received by it and, in its turn in the transmission sequence, transmits acknowledgments to the peers from which the data transmissions were received.

10. The method of any one of claims 7, 8 or 9,
**characterized in that**
each peer (P1-Px) creates and transmits address information whereby each peer determines the peer or peers to which a transmission is directed.

11. The method of any one of claims 7 to 10,
**characterized in that**
including detecting a data collision upon simultaneous transmission by two or more peers (P1-Px), and recommencing the data transmission sequence at a predetermined peer.

12. The method of any one of claims 7 to 11,
**characterized in that**
including determining the integrity of a data transmission and also the beginning and end of the data transmission by way of a cyclic redundancy check.

## Patentansprüche

1. Peer-to-Peer-Kommunikationssystem (Kommunikationssystem zwischen gleichrangigen Teilnehmern), das eine Mehrzahl von Peers (P1-Px) umfasst, die in Serie verbunden sind, so dass jeder Peer jeden anderen Peer hören und mit jedem anderen Peer sprechen kann,
**dadurch gekennzeichnet, dass**
die Peers jeweils eine Identifikationsnummer und Mittel zur aufeinander folgenden Übertragung von Signalen in Entsprechung zu der ldentifikationsnummer besitzen, wobei jeder Peer Mittel zur Generierung eines Signals zur Übertragung aufweist, welches Signal Informationen über die Länge des Signals umfasst, und wobei jeder Peer des weiteren Mittel zur Feststellung der Länge des empfangenen Signals besitzt und an seiner Stelle in der vorgegebenen Sequenz seine Übertragung auslöst, nachdem er festgestellt hat,
dass ein Signal von der durch die Informationen angezeigten Länge von dem in der Sequenz vorangehenden Peer empfangen wurde,
wobei jeder Peer Mittel zur Feststellung der Enden einer Übertragung und Mittel zur Übertragung einer Unterbrechungsnachricht in die Lücke zwischen der vorangehenden Übertragung und dem Beginn der Übertragung durch den in der Sequenz nächst folgenden Peer besitzt.

2. System gemäß Anspruch 1,
**dadurch gekennzeichnet, dass**
jeder Peer (P1-Px) Mittel zur Feststellung der Rate besitzt, mit der Daten im Netzwerk übertragen werden, und Mittel zur Reduzierung der Länge ihrer Übertragung oder zur Eliminierung der Datenübertragung durch ihn für den Fall, dass die Übertragungsrate einen bestimmten Schwellwert überschreitet.

3. System gemäß einem der Ansprüche 1 oder 2,
**dadurch gekennzeichnet, dass**
jeder Peer (P1-Px) des weiteren Mittel zur Protokollierung der von ihm empfangenen Datenübertragungen und zur Übertragung von Bestätigungen an seiner Stelle in der Übertragungssequenz an die Peers, von denen die Datenübertragungen empfangen wurden, besitzt.

4. System gemäß einem der vorangehenden Ansprüche,
**dadurch gekennzeichnet, dass**
jeder Peer (P1-Px) Mittel zum Erstellen und Übertragen von Adressinformationen besitzt, wobei jeder Peer den Peer oder die Peers bestimmt, an die eine Übertragung gerichtet ist.

5. System gemäß einem der vorangehenden Ansprüche,
**dadurch gekennzeichnet, dass**
es Mittel zur Feststellung einer Datenkollision nach der gleichzeitigen Übertragung durch zwei oder mehr Peers (P1-Px) und Mittel zum Neustart der Datenübertragungssequenz bei einem bestimmten Peer aufweist.

6. System gemäß einem der vorangehenden Ansprüche,
**dadurch gekennzeichnet, dass**
es Mittel zur Feststellung der Integrität einer Datenübertragung und auch des Beginns und des Endes der Datenübertragung mittels einer zyklischen Redundanzprüfung aufweist.

7. Verfahren der Peer-zu-Peer-Kommunikation zwischen einer Mehrzahl von Peers (P1-Px), die in Serie verbunden sind, so dass jeder Peer jeden anderen Peer hören und mit jedem anderen Peer sprechen kann, wobei das Verfahren Folgendes umfasst:
Nummerierung jedes einzelnen Peers mit einer Identifikationsnummer;
Übertragung von Signalen durch die Peers in aufeinander folgender Sequenz in Entsprechung zu den Identifikationsnummern; und
Generieren eines Signals zur Übertragung durch jeden einzelnen Peer, das Informationen über die Länge des Signals aufweist;
wobei jeder Peer die Länge des empfangenen Signals feststellt und an seiner Stelle in der vorgegebenen Sequenz seine Übertragung auslöst, nachdem er festgestellt hat, dass ein
Signal von der durch die Informationen angezeigten Länge von dem in der Sequenz vorangehenden Peer empfangen wurde, und
wobei jeder Peer die Enden einer Übertragung feststellt und eine Unterbrechungsnachricht in die Lücke zwischen der vorangehenden Übertragung und dem Beginn der Übertragung durch den in der Sequenz nächst folgenden Peer überträgt.

8. Verfahren gemäß Anspruch 7,
**dadurch gekennzeichnet, dass**
jeder Peer (P1-Px) die Rate feststellt, mit der Daten im Netzwerk übertragen werden, und die Länge ihrer Übertragung reduziert oder die Datenübertragung für den Fall eliminiert, dass die Übertragungsrate einen bestimmten Schwellwert überschreitet.

9. Verfahren gemäß einem der Ansprüche 7 oder 8,
**dadurch gekennzeichnet, dass**
jeder Peer (P1-Px) die von ihm empfangenen Datenübertragungen protokolliert und an seiner Stelle in der Übertragungssequenz Bestätigungen an die Peers überträgt, von denen die Datenübertragungen empfangen wurden.

10. Verfahren gemäß einem der Ansprüche 7, 8 oder 9,
**dadurch gekennzeichnet, dass**
jeder Peer (P1-Px) Adressinformationen erstellt und überträgt, wobei jeder Peer den Peer oder die Peers bestimmt, an die eine Übertragung gerichtet ist.

11. Verfahren gemäß einem der Ansprüche 7 bis 10,
**dadurch gekennzeichnet, dass**
es die Feststellung einer Datenkollision nach der gleichzeitigen Übertragung durch zwei oder mehr Peers (P1-Px) und den Neustart der Datenübertragungssequenz bei einem bestimmten Peer umfasst.

12. Verfahren gemäß einem der Ansprüche 7 bis 11,
**dadurch gekennzeichnet, dass**
es die Feststellung der Integrität einer Datenübertragung und auch des Beginns und des Endes der Datenübertragung mittels einer zyklischen Redundanzprüfung umfasst.

## Revendications

1. Système de communications de poste à poste comprenant une pluralité de postes (P1-Px) connectés en série de sorte que chaque poste peut entendre chaque autre poste et parler à chaque autre poste,
**caractérisé en ce que**
les postes ont chacun un numéro d'identification et des moyens pour transmettre des signaux en séquence en fonction du numéro d'identification, chaque poste comprenant des moyens pour générer un signal à transmettre, lequel signal contient des information sur la longueur du signal, et chaque poste comprenant en outre des moyens pour détecter la longueur du signal reçu et, à son tour dans la séquence prédéterminée, commençant sa transmission lors de la détection du fait qu'un signal de la longueur indiquée par ladite information a été reçu du poste précédent dans la séquence, dans lequel chaque poste comprend des moyens pour détecter les bouts d'une transmission et des moyens pour transmettre un message de rupture dans l'intervalle entre la transmission précédente et le début de la transmission par le poste suivant dans la séquence.

2. Système selon la revendication 1,
**caractérisé en ce que**
chaque poste (P1-Px) comprend des moyens pour détecter le débit auquel les données sont transmises dans le réseau et des moyens pour réduire la durée de sa transmission, ou éliminer la transmission de données par lui si le débit de transmission dépasse un seuil prédéterminé.

3. Système selon l'une quelconque des revendications 1 ou 2,
**caractérisé en ce que**
chaque poste (P1-Px) comprend en outre des moyens pour enregistrer les transmissions qu'il a reçues et, à son tour dans la séquence de transmission, pour transmettre des accusés de réception aux postes desquels il a reçu les transmissions de données.

4. Système selon l'une quelconque des revendications précédentes,
**caractérisé en ce que**
chaque poste (P1-Px) comprend des moyens pour créer et transmettre des informations d'adresses par lesquelles chaque poste détermine le poste ou les postes auxquels une transmission est destinée.

5. Système selon l'une quelconque des revendications précédentes,
**caractérisé en ce qu**
**'**il comprend des moyens pour détecter une collision de données lors d'une transmission simultanée par deux ou plusieurs postes (P1-Px), et des moyens pour recommencer la séquence de transmission de données au niveau d'un poste prédéterminé.

6. Système selon l'une quelconque des revendications précédentes,
**caractérisé en ce qu**
**'**il comprend des moyens pour déterminer l'intégrité d'une transmission de données ainsi que le début et la fin de la transmission de données au moyen d'un contrôle de redondance cyclique.

7. Procédé de communication de poste à poste parmi une pluralité de postes (P1-Px) connectés en série de telle sorte que chaque poste peut entendre chaque autre poste et parler à chaque autre poste, comprenant :
la numérotation de chaque poste avec un numéro d'identification ;
la transmission de signaux par les postes en séquence en fonction des numéros d'identification ; et
la génération d'un signal à émettre par chaque poste incluant des informations sur la longueur du signal ;
dans lequel chaque poste détecte la longueur du signal reçu et, à son tour dans la séquence prédéterminée, commence sa transmission lorsqu'il détecte qu'un signal de la longueur indiquée par lesdites informations a été reçu du poste précédent dans la séquence, et
dans lequel chaque poste détecte la fin d'une transmission et transmet un message de rupture dans l'intervalle entre la transmission précédente et le début de la transmission par le poste suivant dans la séquence.

8. Procédé selon la revendication 7,
**caractérisé en ce que**
chaque poste (P1-Px) détecte le débit auquel les données sont transmises dans le réseau et réduit la longueur de sa transmission ou élimine la transmission de données si le débit de transmission dépasse un seuil prédéterminé.

9. Procédé selon l'une quelconque des revendications 7 ou 8,
**caractérisé en ce que**
chaque poste (P1-Px) enregistre les transmissions de données qu'il reçoit et, à son tour dans la séquence de transmission, transmet les accusés de réception aux postes desquels les transmissions de données ont été reçues.

10. Procédé selon l'une quelconque des revendications 7, 8 ou 9,
**caractérisé en ce que**
chaque poste (P1-Px) crée et transmet des informations d'adresses par lesquelles chaque poste détermine le poste ou les postes auxquels une transmission est destinée.

11. Procédé selon l'une quelconque des revendications 7 à 10,
**caractérisé en ce qu**
**'**il comprend la détection d'une collision de données lors de la transmission simultanée par deux ou plusieurs postes (P1-Px) et la répétition de la séquence de transmission de données au niveau d'un pari prédéterminé.

12. Procédé selon l'une quelconque des revendications 7 à 11,
**caractérisé en ce qu**
'il comprend la détermination de l'intégrité d'une transmission de données ainsi que du début et de la fin de la transmission de données au moyen d'un contrôle de redondance cyclique.
